# EUROPÄISCHE PATENTSCHRIFT

(11) **EP 1 916 438 B1**
(45) Veröffentlichungstag und Bekanntmachung des Hinweises auf die Patenterteilung: **23.09.2009**
(21) Anmeldenummer: 07021011.7
(22) Anmeldetag: 26.10.2007
(51) Int. Cl.: F16D 65/18, F16J 3/04

(54) **Scheibenbremse für ein Nutzfahrzeug**
Disc brake for commercial vehicle
Frein à disque pour un véhicule utilitaire

(30) Priorität: 26.10.2006 DE 102006050519
(43) Veröffentlichungstag der Anmeldung: 30.04.2008
(73) Patentinhaber: KNORR-BREMSE Systeme für Nutzfahrzeuge GmbH, 80809 München (DE)
(72) Erfinder: Macke, Wlodzimierz, 82140 Olching (DE)
(74) Vertreter: Mattusch, Gundula

(56) Entgegenhaltungen:
- WO-A-20/04013511
- DE-B3- 10 331 929
- DE-B3-102005 034 868
- GB-A- 2 001 710

## Beschreibung

Die Erfindung betrifft eine Scheibenbremse für ein Nutzfahrzeug entsprechend dem Oberbegriff des Anspruchs 1.

Eine Scheibenbremse gemäß der Gattung ist aus der DE 103 02 334 A1 bekannt. Bei dieser Konstruktion, die sich prinzipiell bewährt hat, sind die Druckstücke fest mit der Trägerplatte verbunden, vorzugsweise durch eine einstückige Ausbildung mit der Trägerplatte.

Der jeder Stellspindel zugeordnete Faltenbalg, wie er aus der DE 195 15 063 C2 bekannt ist, dient der Abdichtung des Austrittsbereichs der Stellspindel, so dass diese vor Verschmutzung und Witterungseinfluss geschützt ist. Dabei wird der Faltenbalg in dem durch den größten Außendurchmesser definierten Endbereich beispielsweise in eine Verschlussplatte eingepresst, die von den Stellspindeln durchtreten wird. Im Falle einer einstückigen Ausbildung des Bremssattels, also bei Verzicht auf die Verschlussplatte, ist der Faltenbalg direkt am Bremssattel befestigt, vorzugsweise ebenfalls eingepresst.

Eine besondere Belastung des Faltenbalges tritt dann auf, wenn, wie dies bei den Konstruktionen nach dem Stand der Technik möglich ist, der Faltenbalg beim Bremsen infolge eines Überdrucks in der Bremse direkt an der Trägerplatte anliegt.

Beim Zurückdrehen der Stellspindel, wie dies bei einem Belagwechsel erforderlich ist, werden die Faltenbälge nicht mit den Stellspindeln zurückgeführt, also nicht entsprechend gefaltet. Dies führt zu Problemen beim Belagwechsel, da in einem Belagschacht des Bremssattels dann kein ausreichender Platz ist, um den Belagwechsel einfach durchführen zu können.

In diesem Zusammenhang kann es durchaus zu Beschädigungen der Faltenbälge kommen, die unter Umständen zu deren Funktionsausfall führen. In diesem Fall besteht die Gefahr, dass die zu schützenden Bauteile, wie die Stellspindeln einschließlich Gewindelagerungen im Bremssattel beschädigt werden mit der Folge einer Störung dieser Funktionsteile, die wiederum die Betriebssicherheit der Scheibenbremse insgesamt beeinträchtigen kann.

Um dies zu verhindern, wird in der DE 10 2005 034868 B3 vorgeschlagen, den Faltenbalg axial gesichert an der diesem gegenüber frei drehbaren Stellspindel zu halten. Hierzu ist in der Stellspindel eine zumindest teilweise umlaufende Ringnut vorgesehen, in die ein umlaufender Wulst einer mit dem Faltenbalg fest verbundenen Kappe eingreift. Zu dieser Befestigung ist jedoch immer die Kappe erforderlich, die die Stellspindel stirnseitig überdeckt.

Der Erfindung liegt die Aufgabe zugrunde, eine Scheibenbremse der gattungsgemäßen Art so weiterzuentwickeln, dass ihre Betriebssicherheit verbessert und ihre Standzeit erhöht wird.

Diese Aufgabe wird durch eine Scheibenbremse mit den Merkmalen des Anspruchs 1 gelöst.

Durch diese konstruktive Ausbildung wird eine ganze Reihe von Vorteilen erzielt.

So wird durch die axial gesicherte Anbindung des Faltenbalges an der Stellspindel gewährleistet, dass sich der Faltenbalg beim Zurückziehen der Stellspindel mit zurückbewegt, wobei entscheidend ist, dass die Stellspindel gegenüber dem Faltenbalg frei drehbar ist. Hierdurch wird gewährleistet, dass beispielsweise ein vorgegebenes Lüftspiel zwischen der Bremsscheibe und dem Bremsbelag mittels einer Nachstelleinrichtung problemlos einstellbar ist, wozu die Stellspindel als Gewinde-spindel ausgebildet ist, die in ein Innengewinde einer Traverse des Bremssattels eingedreht ist.

Der Faltenbalg kann in an sich bekannter Weise unmittelbar mit dem Bremssattel fest verbunden sein, beispielsweise durch Einpressen. In diesem Sinne kann der Faltenbalg jedoch auch mit einer Verschlussplatte verbunden sein, die eine Montageöffnung des Bremssattels verschließt und dabei Austrittsöffnungen für die Stellspindel aufweist.

Durch die sozusagen zwangsweise Rückführung des Faltenbalges bei einem Zurückziehen der Stellspindel ist auch eine größere Sicherheit bei einem Bremsbelagwechsel gegeben, da nun in jedem Fall ein ungehinderter Zugriff auf den Bremsbelag gewährleistet ist. Die Gefahr, dass der Faltenbalg bei einem Überdruck der Bremse während des Bremsens unmittelbar an den Rücken des Bremsbelages, d.h. an die Trägerplatte angedrückt wird und dort anhaftet, ist somit ausgeschlossen. Hierdurch wird die Betriebssicherheit der Scheibenbremse insgesamt in durchaus bemerkenswerter Weise verbessert. Dies trifft gleichermaßen auf die Erhöhung der Standzeit zu, durch die die Betriebskosten minimiert werden.

Im Fall, dass der Faltenbalg betriebsbedingt ausgetauscht werden muss, ist dies durch die erfindungsgemäße Ausbildung problemlos und sicher möglich. Dabei ist zum Demontieren des Faltenbalges lediglich ein einfaches Werkzeug erforderlich, während eine Montage praktisch werkzeuglos erfolgen kann.

Die Erfindung zeichnet sich insbesondere auch dadurch aus, dass sie sehr einfach und kostengünstig zu realisieren ist. So kann als Feder, mit der der Faltenbalg an der Stellspindel befestigt ist, eine Ringfeder eingesetzt werden, die einerseits im Innenbereich des Faltenbalges und andererseits in einer umlaufenden Ringnut der Stellspindel einliegt.

Ein weiterer Gedanke der Erfindung sieht vor, dass die Ringfeder an zwei sich gegenüberliegenden, dann Schenkel bildenden Seiten jeweils als Gerade ausgebildet ist, die parallel zueinander verlaufen und deren Abstand zueinander kleiner ist als der Abstand der beiden benachbarten, sich ebenfalls gegenüberliegenden konvexen Teile.

Statt zweier können auch mehrere Geraden ausgebildet sein. Auch ist denkbar, die Schenkel abweichend von einer Geraden zu formen, bspw. konkav.

Anstelle einer gebildeten teilweise abgeflachten Kontur besteht auch die Möglichkeit, die Ringfeder als Oval auszubilden, mit den unterschiedlichen Durchmessern, wobei die Ringfeder im Bereich ihres geringsten lichten Abmaßes mit Freilauf der Stellspindel in der umlaufenden Ringnut und im Bereich ihres größten lichten Abmaßes im Faltenbalg liegt, der hierzu ebenfalls eine im Sinne einer Nut ausgebildete Vertiefung aufweist.

Die teilweise freie radiale Bewegbarkeit der Ringfeder im Faltenbalg erlaubt eine einfache Montage, da die Stellspindel, die stirnseitig im Sinne einer Zentrierfase gestaltet sein kann, unter Aufspreizung dieser beiden Schenkel einsteckbar ist, die anschließend in die umlaufende Ringnut einschnappen.

Ein wirksamer Schutz der Stellspindel vor Schmutz, Witterungseinflüssen und Wärmestrahlung beim Bremsen wird durch eine die dem Druckstück zugewandte Stirnseite der Stellspindel überdeckende Kappe erreicht, die fest mit dem Faltenbalg verbunden ist, wozu dieser beispielsweise in die Kappe eingepresst oder einstückig mit der Kappe gespritzt ist.

Im übrigen ist die Ringfeder im Sinne eines offenen Ringes gestaltet, d.h., die Ringfeder weist einen Spalt auf, um die Ringfeder beim Einsetzen in den Faltenbalg problemlos radial zusammendrücken zu können.

Weitere vorteilhafte Ausbildungen der Erfindung sind in den Unteransprüchen gekennzeichnet.

Ein Ausführungsbeispiel der Erfindung wird nachfolgend anhand der beigefügten Zeichnungen beschrieben.

Es zeigen:
- Figur 1: eine Teildarstellung einer Scheibenbremse in einer geschnittenen Draufsicht
- Figuren 2 - 4: jeweils Einzelheiten der Scheibenbremse in verschiedenen Ansichten
- Figur 5: eine Einzelheit der Scheibenbremse in einer sprengbildlichen Darstellung
- Figuren 6 und 7: jeweils einen Teilausschnitt der Scheibenbremse des in der Figur 1 mit A markierten Bereichs.

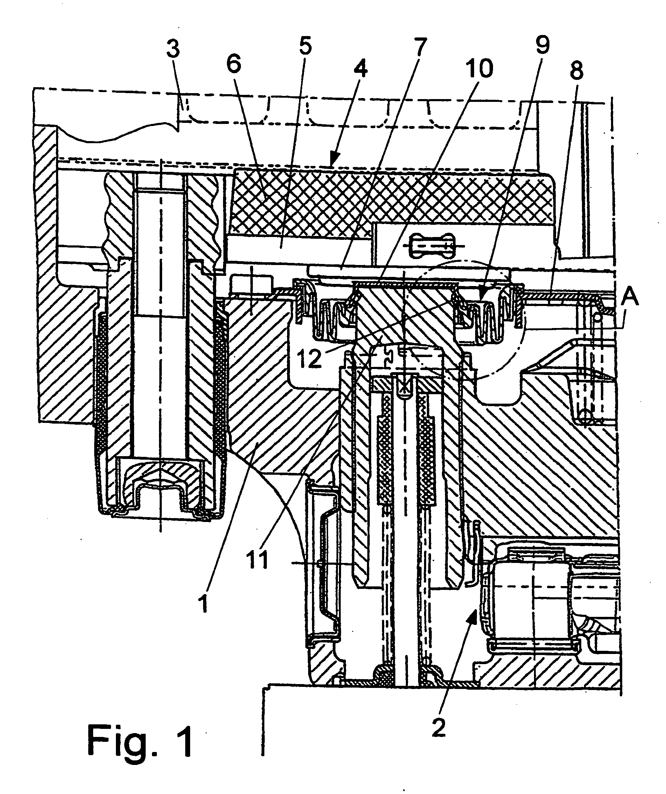

In der Figur 1 ist eine Hälfte einer Scheibenbremse dargestellt, die einen als Schiebesattel ausgebildeten Bremssattel 1 aufweist, der eine Bremsscheibe 3 in ihrem oberen Umfangsbereich umfasst. Dabei kann die Scheibenbremse pneumatisch oder elektromotorisch betätigbar sein.

Zu beiden Seiten der Bremsscheibe 3 sind Bremsbeläge 4 angeordnet, von denen hier einer dargestellt ist, der im Funktionsfall gegen die Bremsscheibe 3 pressbar ist.

Der Bremsbelag 4 besteht aus einer Trägerplatte 5, einem auf deren der Bremsscheibe 3 zugewandten Seite befestigten Reibbelag 6 sowie zwei fest mit der Trägerplatte 5 verbundenen Druckstücken 7, von denen eines in der Figur 1 erkennbar ist.

Über eine im Bremssattel 1 angeordnete drehhebelbetätigte Zuspanneinrichtung 2 wird eine Stellspindel 11 gegen das Druckstück 7 und damit gegen den Bremsbelag 4 gedrückt.

Zur Einstellung eines Lüftspiels zwischen dem Reibbelag 6 und der Bremsscheibe 3, unter Berücksichtigung des Verschleißes des Reibbelages 6 ist die als Gewindespindel ausgebildete Stellspindel 11 drehbar im Bremssattel 1 gelagert und über eine nicht dargestellte Nachstelleinrichtung bewegbar.

Im vorliegenden Ausführungsbeispiel ist der Bremssattel 1 auf seiner der Bremsscheibe 3 zugewandten Seite weitgehend durch eine Verschlussplatte 8 verschlossen, die im Austrittsbereich der Stellspindel 11 durchbrochen ist.

Zur Abdichtung des Austrittsbereichs der Stellspindel 11 aus dem Bremssattel 1 ist ein mit der Verschlussplatte 8 verbundener Faltenbalg 9 vorgesehen, der eine Kappe 10 aufweist, die die Stirnseite der Stellspindel 11 überdeckt und praktisch eine Anlagefläche am Druckstück 7 bildet.

Dabei ist der Faltenbalg 9 verdrehsicher mit der Verschlussplatte 7 verbunden, während die Stellspindel 11 frei drehbar im Faltenbalg 9 gelagert ist, der jedoch axial gesichert anliegt.

Im Falle der einstückigen Ausbildung des Bremssattels 1, also bei Verzicht auf die Verschlussplatte 8, ist der Faltenbalg 9 direkt am Bremssattel 1 befestigt, vorzugsweise eingepresst, ebenso wie im gezeigten Beispiel, bei dem der Faltenbalg ebenfalls in die Verschlussplatte 8 eingepresst ist.

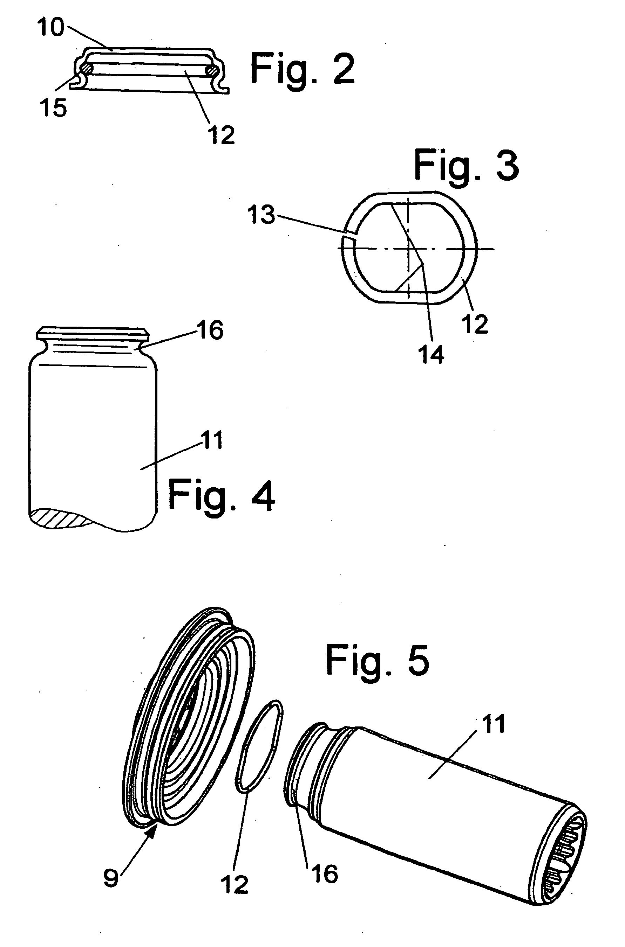

Entsprechend der Erfindung erfolgt die axiale Sicherung des Faltenbalges 9 mittels einer Feder 12, die in den Figuren 3 und 5 jeweils als Einzelheit erkennbar ist.

Diese Feder 12 ist als Ringfeder ausgebildet und weist einen Spalt 13 auf, durch den gebildete Schenkel 14 radial zueinander bewegbar sind.

Im Beispiel sind diese Schenkel 14 abweichend von der im übrigen konvexen Form abgeflacht und bilden so zwei parallel verlaufende Geraden, deren lichtes Abmaß kleiner ist als der Durchmesser der Stirnseite der Stellspindel 11, entsprechend der Figur 4.

In der Figur 2 ist die in die Kappe 10 eingesetzte Feder 12 erkennbar, die unter Aufspreizung in einer Innennut 15 der Kappe 10 einliegt, an die sich die in dieser Figur nicht dargestellte Faltung des Faltenbalges 9 anschließt.

Die Stellspindel 11 ist im Überdeckungsbereich mit der Feder 12 mit einer umlaufenden Ringnut 16 versehen, deren Durchmesser kleiner ist als der lichte Abstand der beiden Schenkel 14 zueinander, so dass die Feder 12 praktisch lose und unter Freilauf der Stellspindel 11 in der Ringnut 16 einliegt, jedoch axial gesichert, da, wie erwähnt, der lichte Abstand der beiden Schenkel 14 kleiner ist als der Durchmesser des stirnseitigen Endbereichs der Stellspindel 11, der praktisch ein Bündchen darstellt. Denkbar ist auch, dass der Durchmesser der Ringnut 16 gleich groß oder geringfügig größer als der genannte Abstand der Schenkel 14 zueinander ist.

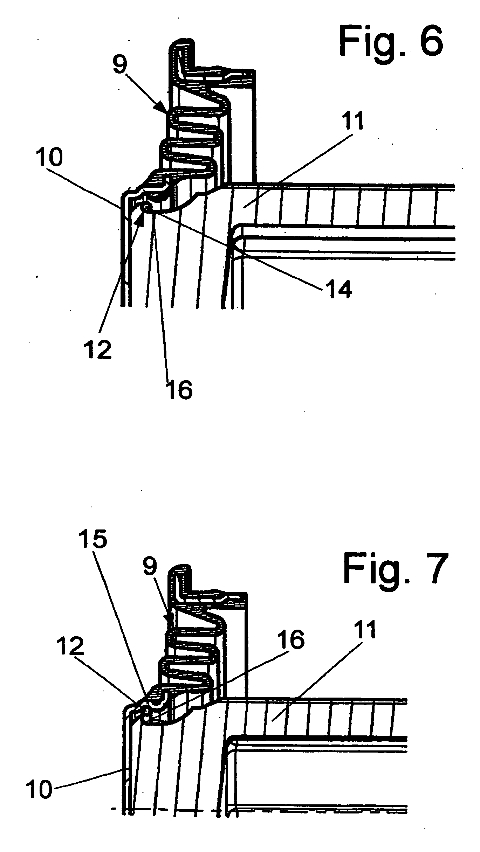

In der Figur 6 ist ein Teilausschnitt gemäß der Kennzeichnung "A" in Figur 1 dargestellt, bei dem die Feder 12 im Bereich des abgeflachten federnden Schenkels 14 dargestellt ist, der im Bereich der Ringnut 16 an der Stellspindel 11 gehalten ist.

Die Figur 7 zeigt einen dazu um 90° versetzten Schnitt, bei dem der konvexe Bereich der Feder 12 im Querschnitt erkennbar ist, der unter Federspannung in der Innennut 15 des Faltenbalges 9 bzw. der Kappe 10 einliegt. Die Ringfeder besteht im übrigen aus einem im Querschnitt runden Federdraht.

Zur Montage der Baueinheit Faltenbalg 9/Stellspindel 11 wird zunächst die Feder 12 unter Zusammendrückung in den Faltenbalg 9 bzw. die Kappe 10 eingeführt bis sie in den Überdeckungsbereich mit der Innennut 15 gelangt. Unter radialer Federspannung liegt dann die Feder 12 in der Innennut 15 an. Diese Anlage bezieht sich, wie erwähnt, ausschließlich auf den konvexen Bereich der Feder 12, während die Schenkel 14 gegenüber der Innennut 15 freiliegen.

Der dem Faltenbalg 9 zugewandte stirnseitige Randbereich der Stellspindel 11 ist als Fase ausgebildet, was sehr deutlich in der Figur 4 zu erkennen ist. Der kleinste Durchmesser der Fase ist kleiner als der lichte Abstand der beiden Schenkel 14, so dass die Fase sozusagen als Spreizhilfe fungiert, mittels der die Stellspindel 11 in die Feder 12 einsteckbar ist, unter Aufspreizung der Schenkel 14, die anschließend im Überdeckungsbereich mit der Ringnut 16 angeordnet sind. Es ist deutlich erkennbar, dass durch die Verbindung mittels der Feder 12 eine axiale Sicherung des Faltenbalges 9 an der Stellspindel 11 gewährleistet ist.

### Bezugszeichenliste

- 1: Bremssattel
- 2: Zuspanneinrichtung
- 3: Bremsscheibe
- 4: Bremsbelag
- 5: Trägerplatte
- 6: Reibbelag
- 7: Druckstück
- 8: Verschlussplatte
- 9: Faltenbalg
- 10: Kappe
- 11: Stellspindel
- 12: Feder
- 13: Spalt
- 14: Schenkel
- 15: Innennut
- 16: Ringnut

## Patentansprüche

1. Scheibenbremse für ein Nutzfahrzeug, mit einem eine Bremsscheibe (3) übergreifenden Bremssattel (1) und mit Bremsbelägen (4), die die Bremsscheibe (3) in Funktionsstellung kontaktieren, wobei mindestens ein Bremsbelag (4) mit einer Trägerplatte (5) und einem daran festgelegten Reibbelag (6) mittels einer Zuspanneinrichtung (2) über zumindest eine im Bremssattel (1) gelagerte, drehbare Stellspindel (11) und ein damit in Wirkverbindung stehendes und fest mit der Trägerplatte (5) verbundenes Druckstück (7) an die Bremsscheibe (3) andrückbar ist, wobei zur Abdichtung des Austrittsbereichs der Stellspindel (11) aus dem Bremssattel (1) ein daran direkt oder indirekt verdrehsicher befestigter Faltenbalg (9) vorgesehen ist, der axial gesichert an der Stellspindel gehalten ist, **dadurch gekennzeichnet, dass** der Faltenbalg (9) mittels einer Feder (12) an der dem Faltenbalg (9) gegenüber frei drehbaren Stellspindel (11) gehalten ist.

2. Scheibenbremse nach Anspruch 1, **dadurch gekennzeichnet, dass** der Faltenbalg eine die dem Druckstück (7) zugewandte Stirnseite der Stellspindel (11) überdeckende Kappe (10) aufweist.

3. Scheibenbremse nach Anspruch 1 oder 2, **dadurch gekennzeichnet, dass** die Feder (12) als Ringfeder ausgebildet ist.

4. Scheibenbremse nach einem der vorhergehenden Ansprüche, **dadurch gekennzeichnet, dass** die Feder (12) bzw. die Ringfeder umfänglich eine vom Kreis abweichende Form aufweist.

5. Scheibenbremse nach einem der vorhergehenden Ansprüche, **dadurch gekennzeichnet, dass** die Feder (12) in einer konzentrisch verlaufenden Innennut (15) des Faltenbalges (9) einliegt.

6. Scheibenbremse nach Anspruch 5, **dadurch gekennzeichnet, dass** die Innennut (15) in der Kappe (10) des Faltenbalges (9) angeordnet ist.

7. Scheibenbremse nach einem der vorhergehenden Ansprüche, **dadurch gekennzeichnet, dass** die Feder (12) in einer umlaufenden Ringnut (16) der Stellspindel (11) einliegt.

8. Scheibenbremse nach Anspruch 7, **dadurch gekennzeichnet, dass** der kleinste lichte Durchmesser der von der Kreisform abweichenden Feder (12) kleiner ist als die die Ringnut (16) begrenzenden Bereiche der Stellspindel (11).

9. Scheibenbremse nach einem der Ansprüche 6 oder 7, **dadurch gekennzeichnet, dass** der kleinste lichte Durchmesser der von der Kreisform abweichenden Feder (12) größer, gleich groß oder geringfügig kleiner ist als der Durchmesser der Spindel (11) im Bereich des Grundes der Ringnut (16).

10. Scheibenbremse nach einem der vorhergehenden Ansprüche, **dadurch gekennzeichnet, dass** die Feder (12) in ihrem Umfang oval ist.

11. Scheibenbremse nach einem der vorhergehenden Ansprüche, **dadurch gekennzeichnet, dass** die Feder (12) zwei parallel zueinander verlaufende gerade oder konkav geformte Schenkel (14) aufweist, an die sich beidseitig jeweils ein konvexer Bereich anschließt.

12. Scheibenbremse nach einem der vorhergehenden Ansprüche, **dadurch gekennzeichnent, dass** die Feder (12) mehrere Schenkel (14) aufweist, die sich gerade oder abweichend von einer Geraden erstrecken.

13. Scheibenbremse nach einem der vorhergehenden Ansprüche, **dadurch gekennzeichnet, dass** der dem Druckstück (7) zugewandte stirnseitige Endbereich der Stellspindel (11) eine Fase aufweist, deren kleinster Durchmesser kleiner ist als der kleinste lichte Durchmesser der von der Kreisform abweichenden Feder (12).

## Claims

1. Disc brake for a commercial vehicle, with a brake calliper (1) overlapping a brake disc (3) and with brake pads (4) contacting the brake disc (3) in the operative position, wherein at least one brake pad (4) with a support plate (5) and a friction pad (4) attached thereto can be pushed against the brake disc (3) by means of an application device (2) via at least one rotatable actuating screw (11) bearing-mounted in the brake calliper (1) and via a clamping pad (7) effectively connected thereto and permanently joined to the support plate (5), wherein, to seal the exit region of the actuating screw (11) from the brake calliper (1), a bellows (9) directly or indirectly and non-rotatably secured thereto, which is held on the actuating screw in an axially secure manner, is provided, **characterised in that** the bellows (9) is held on the actuating screw, which is freely rotatable relative to the bellows (9), by means of a spring (12).

2. Disc brake according to claim 1, **characterised in that** the bellows is provided with a cap (10) covering the end face of the actuating screw (11) which faces the clamping pad (7).

3. Disc brake according to claim 1 or 2, **characterised in that** the spring (12) is designed as a spring collar.

4. Disc brake according to any of the preceding claims, **characterised in that** the spring (12) or spring collar has a circumferential shape which deviates from a circle.

5. Disc brake according to any of the preceding claims, **characterised in that** the spring (12) lies in a concentric internal groove (15) of the bellows (9).

6. Disc brake according to claim 5, **characterised in that** the internal groove (15) is located in the cap (10) of the bellows (9).

7. Disc brake according to any of the preceding claims, **characterised in that** the spring (12) lies in a continuous annular groove (16) of the actuating screw (11).

8. Disc brake according to claim 7, **characterised in that** the smallest inside diameter of the spring (12) deviating from the circular shape is smaller than the regions of the actuating screw (11) which bound the annular groove (16).

9. Disc brake according to claim 6 or 7, **characterised in that** the smallest inside diameter of the spring (12) deviating from the circular shape is greater than, equal to or slightly smaller than the diameter of the screw (11) in the region of the bottom of the annular groove (16).

10. Disc brake according to any of the preceding claims, **characterised in that** the spring (12) is oval in its circumference.

11. Disc brake according to any of the preceding claims, **characterised in that** the spring (12) has two straight or concave legs (14) extending parallel to one another, each of which is adjoined by a convex region.

12. Disc brake according to any of the preceding claims, **characterised in that** the spring (12) has a plurality of legs (14) extending in a straight line or deviating from a straight line.

13. Disc brake according to any of the preceding claims, **characterised in that** the end region of the actuating screw (11) which faces the clamping pad (7) has a chamfer the smallest diameter of which is smaller than the smallest inside diameter of the spring (12) deviating from the circular shape.

## Revendications

1. Frein à disque pour un véhicules utilitaire, comprenant un étrier de frein (1) chevauchant un disque de frein (3) et des garnitures de frein (4) se trouvant en contact avec ledit disque de frein (3) en position opérative, à au moins une garniture de frein (4) étant apte à être pressé contre ledit disque de frein (3), ensemble avec une plaque de support (5) et une garniture de friction (6) y fixée, moyennant un dispositif de serrage de frein (2) via au moins une broche de réglage rotative, logée dans ledit étrier de frein (1) et un élément presseur (7) en connexion opérative avec ladite broche et raccordé, de façon fixe, à ladite plaque de support, à un soufflet (9) étant disposé à rendre étanche la zone de sortie de ladite broche de réglage (11) dudit étrier de frein (1), qui est y fixé directement ou indirectement de façon à empêcher une rotation et qui est retenu à ladite broche de réglage en étant arrêté en sens axial, **caractérisé en ce que** ledit soufflet (9) est retenu moyennant un ressort (12) à ladite broche de réglage (11), qui est apte à tourner librement relativement audit soufflet (9).

2. Frein à disque selon la revendication 1, **caractérisé en ce que** ledit soufflet présente un capuchon (10) recouvrant la face de ladite broche de réglage (11), qui se trouve en face dudit élément presseur (7).

3. Frein à disque selon la revendication 1 ou 2, **caractérisé en ce que** ledit ressort (12) est configuré sous forme d'un ressort-bague.

4. Frein à disque selon une quelconque des revendications précédentes, **caractérisé en ce que** la périphérie dudit ressort (12) ou respectivement dudit ressort-bague présente une forme aberrant d'un cercle.

5. Frein à disque selon une quelconque des revendications précédentes, **caractérisé en ce que** ledit ressort (12) est placé dans une rainure intérieure (15) dudit soufflet (9), qui s'étend le long d'une ligne concentrique.

6. Frein à disque selon la revendication 5, **caractérisé en ce que** ladite rainure intérieure (15) est formée dans ledit capuchon (10) dudit soufflet (9).

7. Frein à disque selon une quelconque ou plusieurs des revendications précédentes 1 à 6, **caractérisé en ce que** ledit ressort (12) est placé dans une rainure annulaire périphérique (16) de ladite broche de réglage (11).

8. Frein à disque selon la revendication 7, **caractérisé en ce que** le plus petit diamètre intérieur dudit ressort (12) aberrant de la forme d'un cercle est plus petit que les zones à ladite broche de réglage (11), qui délimitent ladite rainure annulaire (16).

9. Frein à disque selon une quelconque ou plusieurs des revendications précédentes 1 à 6, **caractérisé en ce que** le plut petit diamètre intérieur dudit ressort (12) aberrant de la forme d'un cercle est plus grand, égal à ou un peu plus petit que le diamètre de ladite broche (11) dans la zone du fond de ladite rainure annulaire (16).

10. Frein à disque selon une quelconque ou plusieurs des revendications précédentes 1 à 6, **caractérisé en ce que** ledit ressort (12) présente une périphérie ovale.

11. Frein à disque selon une quelconque ou plusieurs des revendications précédentes 1 à 6, **caractérisé en ce que** ledit ressort (12) comprend deux branches étroites ou en forme concave (14), qui s'étendent l'une en parallèle à l'autre, auxquelles se joigne une zone convexe respective aux deux côtés.

12. Frein à disque selon une quelconque ou plusieurs des revendications précédentes 1 à 6, **caractérisé en ce que** ledit ressort (12) présente plusieurs branches (14) s'étendant le long d'une ligne droite ou une ligne aberrant d'une ligne droite.

13. Frein à disque selon une quelconque ou plusieurs des revendications précédentes 1 à 6, **caractérisé en ce que** la zone terminale de ladite broche de réglage, du côté de face qui se trouve en face dudit élément presseur (7), présente un chanfrein dont le plus petit diamètre est plus petit que le plus petit diamètre intérieur dudit ressort (12) aberrant de la forme d'un cercle.
